# EUROPÄISCHE PATENTSCHRIFT

(11) **EP 0 950 562 B1**
(45) Veröffentlichungstag und Bekanntmachung des Hinweises auf die Patenterteilung: **21.06.2006**
(21) Anmeldenummer: 99107192.9
(22) Anmeldetag: 13.04.1999
(51) Int. Cl.: B60P 7/13, B64D 9/00

(54) **Riegel**
Lock
Verrou

(30) Priorität: 16.04.1998 DE 19816892
(43) Veröffentlichungstag der Anmeldung: 20.10.1999
(73) Patentinhaber: Telair International GmbH, 83714 Miesbach (DE)
(72) Erfinder: Huber, Thomas, 82393 Iffeldorf (DE); Holzner, Richard, 84405 Dorfen (DE)
(74) Vertreter: Bohnenberger, Johannes

(56) Entgegenhaltungen:
- EP-A- 0 581 071
- US-A- 3 741 508
- US-A- 3 906 870
- US-A- 5 011 348
- US-A- 5 573 359

## Beschreibung

Die Erfindung betrifft ein Riegelelement nach dem Oberbegriff des Patentanspruchs 1.

Zum Sichern von Containern, Paletten und dergleichen, insbesondere auf dem Frachtraumboden eines Flugzeugs, sind Riegelelemente bekannt, die einen Rahmen und mindestens einen Riegelhaken bzw. Arretierhaken umfassen.

Das aus der US-Patentschrift 5 265 991 bekannte Riegelelement weist einen Rahmen zur Befestigung des Riegelelements auf dem Boden des Frachtraums und einen Sockel auf, der verschwenkbar auf dem Rahmen befestigt ist. Der Sockel weist an seinem dem Rahmen abgewandten Ende zwei voneinander wegweisende Haken-Nasen auf, die einstückig mit dem Sockel verbunden und mit dem Sockel verschwenkbar sind. Die Anordnung aus Rahmen, Sockel und an dem Sockel angeformter Haken-Nase ist dergestalt, daß die Haken-Nase auf der Halteleiste eines Frachtcontainers, der sich in seiner endgültigen Stauposition befindet, aufliegt und den Frachtcontainer gegen vertikales und laterales Verrutschen sichert. Der Sockel bildet ferner eine laterale Führung bei der Beförderung des Frachtcontainer in seine endgültige Stauposition. Der Sockel kann zusammen mit den Haken-Nasen aus seiner senkrechten Arbeitsposition nach links in eine Rastposition und nach rechts in eine weggeklappte Position unterhalb des Frachtraumbodens verschwenkt werden. Eine Feder bringt den Sockel zusammen mit den an ihm angeformten Haken-Nasen von der weggeklappten Position oder von der Rastposition in die senkrechte Arbeitsposition. In der Rastposition hält eine manuell betätigbare Raste den Sockel lösbar in der Rastposition.

Auch aus der gattungsbildenden 0 581 071 A1 ist ein Riegelelement zum verriegelten Halten von Gegenständen, insbesondere Containern im Frachtraum von Flugzeugen bekannt.

Tritt der in der Praxis recht häufige Fall auf, daß ein Container den die Haken-Nasen tragenden Sockel des Riegelelements bei der Beförderung des Containers in seine endgültige Stauposition seitlich anfährt bzw. streift der Container mit seinen zur Arretierung vorgesehenen Vorsprüngen oder Halteleisten den bekannten Sockel, so verschwenkt der Sockel in Beförderungsrichtung und die vom Sockel mitverschwenkten Haken-Nasen verklemmen sich hierbei mit den Vorsprüngen bzw. einer Halteleiste des Containers. Dann ist es nötig, den Container mehrfach vor- und zurückzubewegen, um den Container doch noch in seine endgültige Stauposition bringen zu können und ein Verriegeln des Containers in lateraler und vertikaler Richtung durch die derart gestalteten Riegelelemente sicherzustellen. Ein solches Verklemmen verhindert ein schnelles Be- und Entladen des Frachtraums und führt bei dem Bedienungspersonal aufgrund des zeitlichen Drucks beim Lade- und Entladevorgang häufig zu recht rabiaten Maßnahmen, um den Container dennoch möglichst rasch in seine endgültige Stauposition zu bringen. Durch die Gewaltanwendung kommt es immer wieder zu Beschädigungen des Riegelelements, die tückischerweise zunächst unbemerkt bleiben und nachfolgend das Riegelelement durch die starken Vibrationen während des Flugbetriebs außer Funktion setzen können, so daß im Fall mehrerer beschädigter Riegelelemente die Gefahr besteht, daß der Frachtcontainer während des Fluges nicht mehr sicher in seiner endgültigen Stauposition gehalten werden kann.

Der Erfindung liegt die Aufgabe zugrunde, ein Riegelelement der eingangs genannten Art dahingehend weiterzubilden, daß eine erhöhte Sicherheit mit geringem Aufwand gegeben ist.

Diese Aufgabe wird durch die technishen merkmale der Anspruche gelost.

Ein erster wichtiger Aspekt der Erfindung besteht darin, die Arretierhaken nicht einstückig an den ggü. dem Rahmen des Riegelelements verschwenkbaren Sockel anzubringen, sondern den Sockel mit mindestens einem Arretierhaken zu versehen, der gegenüber dem Sockel des Riegelelements verschwenkbar ist. Fährt ein Container oder dergleichen das erfindungsgemäße Riegelelement seitlich an, so klappt der Sockel in Bewegungsrichtung und mit ihm der verschwenkbare Arretierhaken weg. Hierdurch wird ein Verklemmen des Containers mit dem Riegelelement wirksam verhindert, und der Container oder dergleichen kann ohne ein Verklemmen in seine endgültige Stauposition gebracht werden. Ein ggf. verschwenkter Sockel richtet sich in seine senkrechte Arbeits- bzw. Arretierposition auf, und der auf dem Sockel verschwenkbare Arretierhaken kann ebenfalls in seine Arbeits- bzw. Arretierposition oberhalb einer Halteleiste des Containers oder dergleichen verschwenken und so den Container gegen ein laterales oder vertikales Verrutschen sichern. Da sich das erfindungsgemäße Riegelelement nicht mit dem Container verklemmt, kann das Bedienungspersonal den Container schnell und unproblematisch in seine endgültige Stauposition bringen und eine Gewaltanwendung mit dem Container gegen das Riegelelement unterbleibt.

Ein weiterer wichtiger Aspekt der Erfindung besteht darin, in der dem Container zugewandten Seitenfläche des Sockels eine Aussparung bzw. einen Durchbruch zur Aufnahme einer Ablenk- bzw. Führungsrolle vorzusehen, die etwas über die Seitenfläche des Sockels vorspringt. Dies erleichtert die Beförderung des Containers oder dergleichen in seine endgültige Stauposition. Zudem fängt die Ablenkrolle Stöße bei der Beförderung des Containers in seine endgültige Stauposition ab und vermindert zusätzlich die Gefahr von Beschädigungen des erfindungsgemäßen Riegelelements. Aufgrund der Ablenkrolle ist es zudem möglich, die Wartungsintervalle für das erfindungsgemäße Riegelelement zu verlängern, ohne daß die Sicherheit hierunter leidet. Anstelle eines Austauschs des erfindungsgemäßen Riegelelements, reicht es oftmals aus, lediglich die Ablenkrolle zu ersetzen.

In vorteilhafter Weise ist vorgesehen, die Ablenkrolle auf der durch den Sockel verlaufenden Schwenkachse des Arretierhakens zu lagern, so daß mit wenigen Handgriffen, z.B. im Rahmen von Wartungsarbeiten, sowohl die Ablenkrolle als auch der Arretierhaken ausgetauscht werden kann. Zudem erlaubt die multifunktionale Verwendung der Schwenkachse bzw. Welle zum Verschwenken des Arretierhakens, daß auf weitere Elemente verzichtet werden kann und das erfindungsgemäße Riegelelement leicht und kleinbauend ist. Die Verwendung weniger Komponenten zur Realisierung des erfindungsgemäßen Riegelelements ermöglicht eine unkomplizierte Wartung bzw. Herstellung des Riegelelements, was der Sicherheit und Zuverlässigkeit des Riegelelements förderlich ist.

Bevorzugte Ausführungsformen der Erfindung sind in den abhängigen Patentansprüchen angegeben.

Nachfolgend wird die Erfindung anhand von Zeichnungen eines Ausführungsbeispiels näher erläutert. Hierbei zeigen:
- Fig. 1: ein Riegelelement mit verschwenkbarem Sockel und verschwenkbaren Arretierhaken in deren Arbeitsposition in perspektivischer Gesamtdarstellung;
- Fig. 2: das Riegelelement gemäß Fig. 1 in Draufsicht, wobei der zweite verschwenkbare Arretierhaken in der Arbeitsposition sowie um 45° und 90° verschwenkt dargestellt ist;
- Fig. 3: das Riegelelement gemäß Fig. 1 mit einem um ca. 90° ggü. dem Rahmen des Riegelelements verschwenkten Sockel in perspektivischer Gesamtdarstellung;
- Fig. 4: das Riegelelement gemäß Fig. 3 in einer Seitenansicht;
- Fig. 5: einen Schnitt des Riegelelements entlang der Linie I - I in Fig. 2;
- Fig. 6: einen Schritt des Riegelelements entlang der Linie II - II in Figur 2.

Bei der nachfolgenden Beschreibung werden für gleiche und gleichwirkende Teile dieselben Bezugsziffern verwendet.

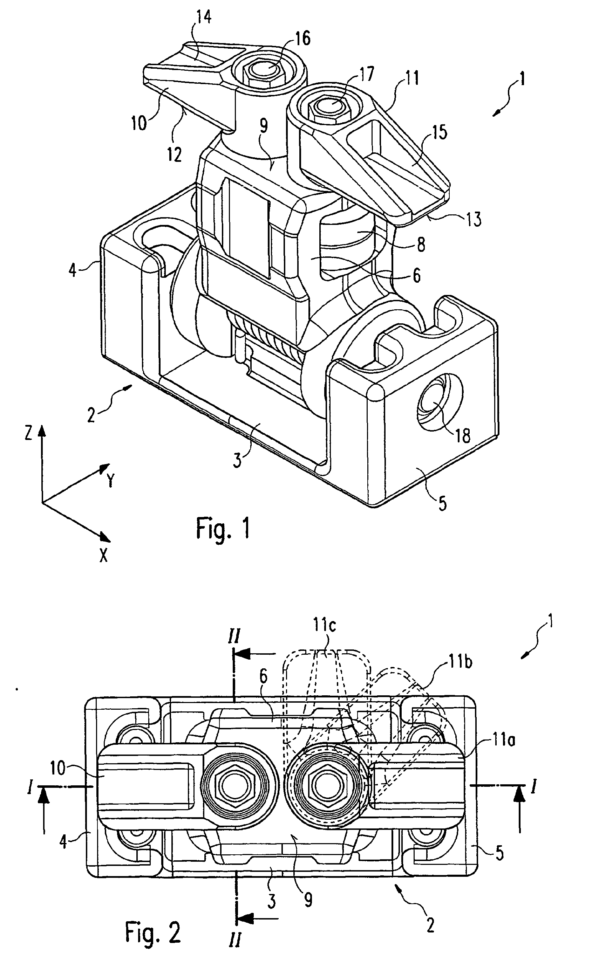

In den Figuren 1, 5 und 6 ist ein erfindungsgemäßes Riegelelement mit einem Rahmen 2 und einem in dem Rahmen 2 verschwenkbaren Sockel 6 in seiner Arbeits- bzw. Verriegelungsposition dargestellt. Über der Deckfläche 9 des Sockels 6 sind ein erster Arretierhaken 10 und ein zweiter Arretierhaken 11 angeordnet, die jeweils parallel zur Deckfläche 9 des Sockels 6 verschwenkbar sind. Der U-förmige Rahmen 2 weist einen Boden 3, ein erstes Seitenteil 4 und ein zweites Seitenteil 5 auf. Im ersten Seitenteil 4 und dem zweiten Seitenteil 5 sind jeweils die Enden einer dritten Welle 18 gelagert. Im U-förmigen Ausschnitt des Rahmens 2 befindet sich das untere Ende des Sockels 6, das die dritte Welle 18 umschließt und das auf der Welle 18 nach Art einer Pleuelstange gelagert und gegenüber dem Rahmen 2 verschwenkbar ist. Die dritte Welle 18 ist im Bereich des U-förmigen Ausschnitts des Rahmens 2 von einer dritten Feder 23 umgeben. Ein Ende der Feder 23 ist mit dem unteren Ende des Sockels 6 verbunden, und das andere Ende der Feder 23 ist derart mit dem Rahmen 2 verbunden, daß die Feder 23 den Sockel 6 bei seiner Auslenkung aus der senkrechten Arbeitsposition mit einer Federkraft beaufschlagt, die den Sockel 6, bei fehlender Einwirkung einer äußeren Kraft, aus einer in Y-Richtung oder entgegengesetzt verschwenkten Position in seine gegenüber dem Rahmen 2 senkrechte Arbeitsposition zurückbewegt. Hierbei dreht sich das auf der dritten Welle 18 gelagerte untere Ende des Sockels 6 um die dritte Welle 18.

Im Sockel 6 ist eine erste Welle 16 und eine zweite Welle 17 drehbar gelagert. Beide Wellen 16 und 17 weisen einen Abstand zueinander auf und verlaufen in Z-Richtung. Das aus der Deckfläche 9 des Sockels 6 herausragende Ende der ersten Welle 16 und das aus der Deckfläche 9 des Sockels 6 herausragende Ende der zweiten Welle 17 weisen ein leicht verjüngtes Ende und anschließend nach außen hin ein Außengewinde auf. Das verjüngte Ende der ersten Welle 16 nimmt den Arretierhaken 10 auf und die Verjüngung der ersten Welle 16 steht mit einer partiell und komplementär verjüngten Bohrung im ersten Arretierhaken 10 in Eingriff, wodurch die Höhe des ersten Arretierhakens 10 auf der ersten Welle 16 über der Deckfläche 9 definiert wird. In gleicher Weise ist im zweiten Arretierhaken 11 eine partiell verjüngte Bohrung vorgesehen, die mit der Verjüngung der zweiten Welle 17 in Eingriff steht, die Z-Position des zweiten Arretierhakens 11 über der Deckfläche 9 festlegt und so definierte Verhältnisse beim Verschwenken des ersten Arretierhakens 10 und des zweiten Arretierhakens 11 auf der Deckfläche 9 des Sockels 6 ermöglicht. In Z-Richtung ist die Position des ersten Arretierhakens 10 durch eine Mutter 26, die auf das Außengewinde am äußeren Ende der ersten Welle 16 aufgeschraubt ist, festgelegt. Ebenso verhindert eine Mutter 27, die auf dem Außengewinde des äußeren Endes der zweiten Welle 17 aufgeschraubt ist, daß sich der zweite Arretierhaken 11 von der zweiten Welle 17 unbeabsichtigt in Z-Richtung lösen kann.

Der erste verschwenkbare Arretierhaken 10 und der zweite verschwenkbare Arretierhaken 11 haben jeweils die Form einer Nase und sind vorzugsweise formschlüssig (nicht dargestellt) derart auf den zugehörigen ersten und zweiten Wellen 16 und 17 angebracht, daß der erste Arretierhaken 10 entgegen der X-Richtung und der zweite Arretierhaken 11 in X-Richtung weist. Der erste Arretierhaken 10 hat eine ebene Unterfläche 12, die sich weitgehend parallel zum Boden 3 des Rahmens 2 erstreckt. Insbesondere aufgrund einer Gewichtsersparnis, ist der erste Arretierhaken 10 mit einer halboffenen Dreiecksnut 14 versehen. Der zum ersten Arretierhaken 10 identische zweite Arretierhaken 11 weist ebenfalls eine ebene Unterfläche 13 auf, die parallel zum Boden 3 des Rahmens 2 verläuft und ebenfalls mit einer halboffenen Dreiecksnut 15 versehen ist.

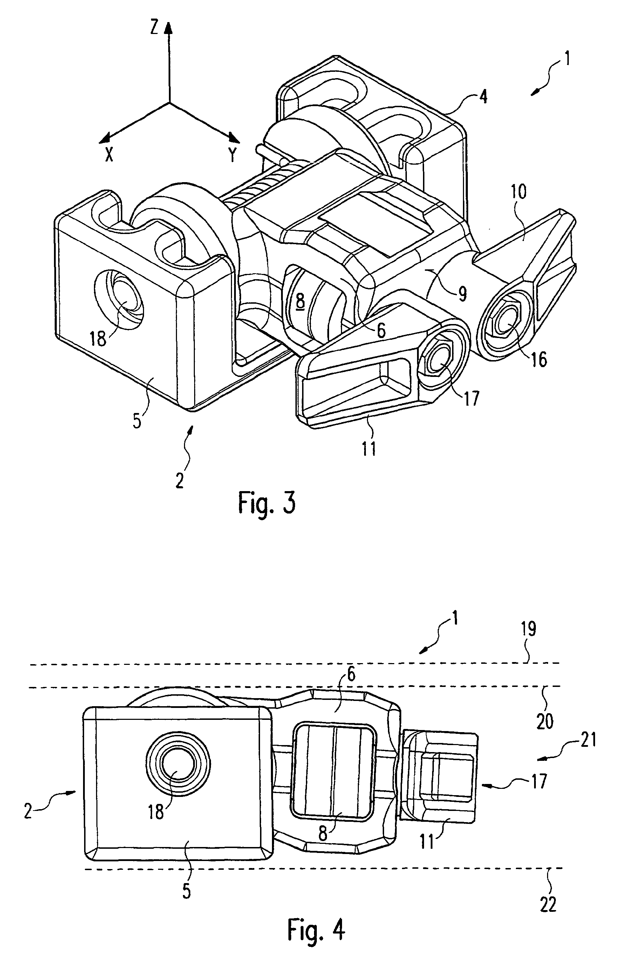

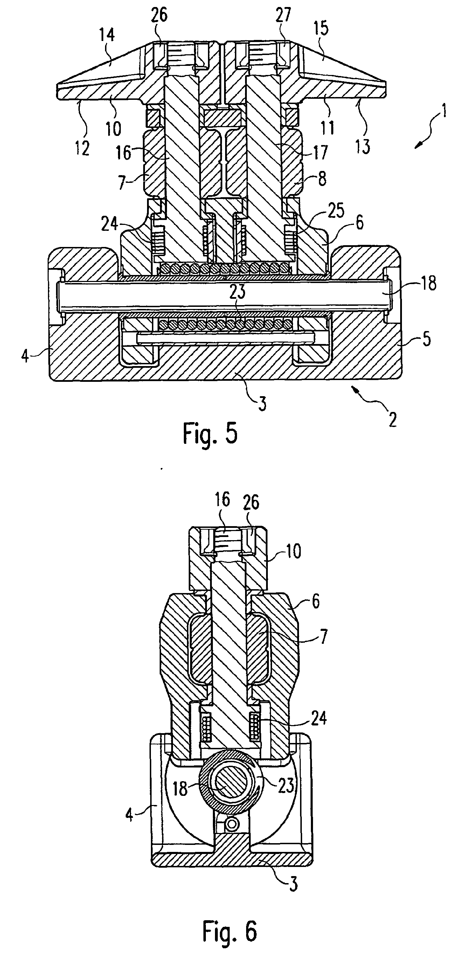

Das im Sockel 6 verlaufende untere Ende der ersten Welle 16 ist von einer ersten Feder 24 umgeben (vgl. die Figuren 4 und 5), deren erstes Ende am Sockel 6 und deren zweites Ende an der drehbaren Welle 16 derart befestigt ist, daß die erste Feder 24 die erste Welle 16 bei einer Auslenkung des ersten Arretierhakens 10 aus seiner entgegen der X-Richtung verlaufenden Arbeitsposition mit einer Federkraft beaufschlagt, die den verschwenkbaren ersten Arretierhaken 10, bei fehlender Einwirkung einer äußeren Kraft, in seine Arbeitsposition zurückbewegt. Hierbei dreht sich die erste Welle 16 im Sockel 6. In gleicher Weise ist das im Sockel 6 verlaufende untere Ende der zweiten Welle 17 von einer zweiten Feder 25 umgeben, deren erstes Ende am Sockel 6 und deren zweites Ende an der im Sockel 6 drehbaren zweiten Welle 17 derart befestigt ist, daß die zweite Feder 25 die zweite Welle 17 bei einer Auslenkung des zweiten Arretierhakens 11 aus seiner in X-Richtung weisenden Arbeitsposition mit einer Federkraft beaufschlagt, die den zweiten Arretierhaken 11, bei fehlender Einwirkung einer äußeren Kraft, in seine Arbeitsposition zurückbewegt.

In X-Richtung weist der Sockel 6 einen horizontalen Durchbruch auf. Im Bereich des horizontalen Durchbruchs des Sockels 6 umschließt eine erste Ablenkrolle 7 die erste Welle 16 und eine zweite Ablenkrolle 8 die zweite Welle 17. Die erste Ablenkrolle 7 ist auf der ersten Welle 16 und die zweite Ablenkrolle 8 ist auf der zweiten Welle 17 drehbar gelagert. Die erste Ablenkrolle 7 ragt aus dem Durchbruch im Sockel 6 entgegengesetzt zur X-Richtung geringfügig heraus. In analoger Weise ragt die zweite Ablenkrolle 8 geringfügig in X-Richtung aus dem Durchbruch des Sockels 6 heraus und bildet eine Führung für die Halteleiste eines in eine endgültige Stauposition beförderten Containers oder dergleichen, die in der endgültigen Stauposition in vertikaler Richtung durch die Arretierhaken und in lateraler Richtung durch die Sockel 6 mindestens eines Riegelelements 1 gehalten wird.

Figur 2 zeigt das Riegelelement gemäß Figur 1 in Draufsicht. Das Bezugszeichen lla zeigt den zweiten Arretierhaken 11 in seiner Arbeitsposition, das Bezugszeichen 11b zeigt den Arretierhaken 11 in einer entgegengesetzt zum Uhrzeigersinn um 45° verschwenkten Position (gestrichelt dargestellt) und schließlich zeigt das Positionszeichen 11c den zweiten Arretierhaken 11 in einer um 90° gegen den Uhrzeigersinn aus seiner Arbeitsposition verschwenkten zweiten Arretierhaken (ebenfalls gestrichelt dargestellt). Zudem kann der zweite Arretierhaken 11 aus seiner Arbeitsposition in Richtung des Uhrzeigersinns zumindest im Bereich von 0 bis 90° verschwenkt werden (nicht dargestellt). In analoger Weise läßt sich der erste Arretierhaken 10 vorzugsweise ebenfalls über einen Bereich von jeweils 0 bis 90° in beide Richtungen um seine Arbeitsposition verschwenken, wenn eine äußere Kraft, beispielsweise durch einen vorbeifahrenden Container, eine Frachtpalette oder anderes Frachtgut, auf den ersten oder zweiten Arretierhaken ausgeübt wird.

Figur 3 zeigt das Riegelelement gemäß Figur 1 mit einem um ca. 90° gegenüber dem Rahmen 2 aus seiner Arbeitsposition in Y-Richtung verschwenkten Sockel in perspektivischer Gesamtdarstellung. Das in Figur 3 dargestellte "Wegklappen" des Sockels in Y-Richtung tritt insbesondere dann auf, wenn ein in der Y-Richtung heranfahrender Container oder dergleichen gegen den Sockel 6 des Riegelelements 1 auffährt und den Sockel 6 umlegt, so daß der Container das Riegelelement 1 weitgehend ungehindert passieren kann. Ebenso kann der Sockel in entgegengesetzter Y-Richtung umgelegt werden (nicht dargestellt).
Figur 4 zeigt das Riegelelements 1 gemäß der Figur 3 in einer Seitenansicht und die Anordnung des Riegelelements 1 in einem Zwischenboden 21 unterhalb des Frachtraumbodens 19 in weggeklappter Position. In Figur 4 ist mit der gestrichelten Linie 19 der Boden des Frachtraums bzw. die Oberkante des Zwischenbodens 21 angedeutet, die gestrichelte Linie 20 deutet die Oberkante des im Zwischenboden 21 eingelassenen Riegelelements 1 in weggeklappter Position und schließlich deutet die gestrichelte Linie 22 die Unterkante des Zwischenbodens 21 an.

Erfindungsgemäß ist insbesondere vorgesehen, das beschriebene Riegelelement mehrfach entlang von parallelen Linien in einem Zwischenboden unterhalb des Bodens des Frachtraums, insbesondere dem Frachtraum eines Flugzeugs, vorzusehen. Der Abstand der parallelen Linien entlang derer die erfindungsgemäßen Riegelelemente 1 vorgesehen sind, entspricht vorzugsweise weitgehend dem Abstand eines sogenannten halben Containers. Wird nun ein sogenannter ganzer Container bzw. eine entsprechende Frachtpalette oder dergleichen in ihre endgültige Stauposition gebracht, so wird der ganze Container zwischen die linke und rechte Linie, entlang derer erfindungsgemäße Riegelelemente 1 angeordnet sind, befördert. Hierbei untergreift eine jeweils links und rechts, vorzugsweise am Boden des ganzen Containers vorgesehene Befestigungsleiste einen linken und rechten Arretierhaken und legt den Sockel 6 des ersten Riegelelements 1 auf der mittleren Linie zwischen der linken und rechten Linie in Beförderungsrichtung um. Wird der ganze Container weiter in seine endgültige Stauposition befördert, so untergreift die linke und rechte Halteleiste weitere linke und rechte Arretierhaken erfindungsgemäßer Riegelelemente 1 bzw. legt weitere Sockel von Riegelelementen auf der Mittellinie zwischen linker und rechter Linie um. Nachdem der Container in seine endgültige Stauposition gebracht worden ist, sichern die erfindungsgemäßen Riegelelemente 1 den ganzen Container sowohl in lateraler als auch in vertikaler Richtung gegen ein Verrutschen aus der endgültigen Stauposition des Containers. Zur weiteren Fixierung des Containers sind an seinem vorderen und hinteren Ende vorzugsweise weitere Riegelelemente vorgesehen.

Beim Einschieben des Containers, kommt es recht häufig vor, daß die Halteleisten des Containers bzw. der Container selbst leicht schräg gegen den Sockel eines Riegelelements in seine endgültige Stauposition eingeschoben wird. Ggf. klappt der Sockel in Bewegungsrichtung des Containers weg, und der Container bzw. die Halteleiste des Containers würde sich zwischen dem wegklappenden Sockel und dem über der Halteleiste befindlichen Arretierhaken verklemmen, wenn der Arretierhaken nicht entgegen der Y-Richtung
(vgl. Figur 1) wegklappbar wäre. Aufgrund des zusätzlich zum Sockel wegklappbaren Arretierhakens, ist es möglich, den Container weitgehend ohne ein Verklemmen der Halteleiste bzw. des Containers selbst mit dem Sockel und dem Arretierhaken in seine endgültige Stauposition zu bringen. Ist der Container weitgehend in seiner endgültigen Stauposition, so richten sich die Sockel des erfindungsgemäßen Riegelelements ggf. auf, die Arretierhaken schwenken ggf. in ihre Arbeitsposition zurück und übergreifen die Halteleisten des Containers, so daß eine sichere Halterung des Containers gegen laterales oder vertikales Verrutschen des Containers ermöglicht ist. Vorzugsweise ist der Sockel sowohl entgegengesetzt zum Uhrzeigersinn als auch mit dem Uhrzeigersinn verschwenkbar. Dasselbe gilt für die auf dem Sockel verschwenkbaren Arretierhaken. Hierdurch kann ein Verklemmen des Containers zwischen zwei Reihen mit erfindungsgemäßen Riegelelementen verhindert werden, und zwar unabhängig davon, ob der Container aus einer ersten Richtung oder einer zur ersten Richtung entgegengesetzten Richtung in seine endgültige Stauposition befördert wird. Ein weitgehend müheloses Einschieben des Containers in seine endgültige Stauposition wird insbesondere auch dadurch begünstigt, daß der Sockel des erfindungsgemäßen Riegelelements mit Ablenkrollen versehen ist, die die Halteleisten des Containers führen.

Die vorgenannten Ausführungen gelten ebenso für einen sogenannten halben Container, wobei dieser zwischen zwei unmittelbar benachbarte Reihen mit erfindungsgemäßen Riegelelementen eingeschoben wird und demzufolge keine Riegelelemente entlang einer Mittellinie beim Einbringen in die endgültige Stauposition umgelegt werden.

### Bezugszeichenliste

- 1: Riegelelement
- 2: Rahmen
- 3: Boden des Rahmens 2
- 4: erstes Seitenteil des Rahmens 2
- 5: zweites Seitenteil des Rahmens 2
- 6: im Rahmen 2 verschwenkbarer Sockel
- 7: erste Ablenkrolle im Sockel 6
- 8: zweite Ablenkrolle im Sockel 6
- 9: obere Deckfläche des Sockels 6
- 10: erster verschwenkbarer Arretierhaken in Form einer Nase
- 11: zweiter verschwenkbarer Arretierhaken in Form einer Nase
- 11a: zweiter Arretierhaken 11 in Arretierposition
- 11b: zweiter Arretierhaken 11 in einer ggü. der Arretierposition um 45° verschwenkten Position
- 11c: zweiter Arretierhaken 11 in einer ggü. der Arretierposition um 90° verschwenkten Position
- 12: ebene Unterfläche des ersten Arretierhakens 10
- 13: ebene Unterfläche des zweiten Arretierhakens 11
- 14: halboffene Dreiecksnut im ersten Arretierhaken 10
- 15: halboffene Dreiecksnut im zweiten Arretierhaken 11
- 16: im Sockel 6 drehbar gelagerte und ggü. dem Rahmen verschwenkbare erste Welle, die an ihrem äußeren Ende den ersten Arretierhaken 10 trägt
- 17: im Sockel 6 drehbar gelagerte und ggü. dem Rahmen verschwenkbare zweite Welle, die an ihrem äußeren Ende den zweiten Arretierhaken 11 trägt
- 18: im Rahmen 2 angeordnete dritte Welle, auf der der Sockel 6 drehbar gelagert und ggü. dem Rahmen 2 verschwenkbar ist
- 19: Boden des Frachtraums und Oberkante eines Zwischenbodens unterhalb des Frachtraumbodens
- 20: Oberkante des unter dem Boden des Frachtraums 19 im Zwischenboden eingelassenen Riegelelements
- 21: Zwischenboden zur Aufnahme des Riegelelements unterhalb des Frachtraumbodens 19
- 22: Unterkante des Zwischenbodens 21
- 23: dritte Feder zu Bewegung des Sockels 6 aus einer verschwenkten Position in seine senkrechte Arretierposition
- 24: erste Feder zur Bewegung des ersten Arretierhakens 10 aus einer verschwenkten Position in seine zur Außenfläche eines Containers senkrechte Arretierposition
- 25: zweite Feder zur Bewegung des zweiten Arretierhakens 11 aus einer verschwenkten Position in seine zur Außenfläche eines Containers senkrechte Arretierposition
- 26: erste Mutter zur Fixierung des ersten Arretierhakens 10 auf der ersten Welle 16
- 27: zweite Mutter zur Fixierung des zweiten Arretierhakens 11 auf der zweiten Welle 17

## Patentansprüche

1. Riegelelement (1), insbesondere zur Sicherung von Containern und Paletten auf dem Frachtraumboden eines Flugzeugs, mit
einem Rahmen (2) mit einer im Rahmen angeordneten dritten Welle (18), einem Sockel (6), dessen unteres Ende auf der dritten Welle (18) drehbar gelagert und gegen-über dem Rahmen (2) verschwenkbar ist und mindestens einem Arretierhaken (10, 11), der an dem Sockel (6) befestigt und gegenüber dem Sockel verschwenkbar ist,
**gekennzeichnet durch** eine dritte Feder (23), deren erstes Ende am Rahmen (2) und deren zweites Ende am Sockel (6) befestigt ist und den Sockel (6) in eine zum Rahmen vorzugsweise senkrechte Arretier- bzw. Arbeitsposition des Riegelelements (1) verschwenkt.

2. Riegelelement nach Anspruch 1,
**dadurch gekennzeichnet, dass**
der Sockel (6) mindestens eine weitgehend senkrecht durch den Sockel verlaufende Bohrung aufweist, die Bohrung an ihrem dem Rahmen (2) zugewandten Ende einen größeren Durchmesser gegenüber der Bohrung an ihrem dem Rahmen abgewandten Ende aufweist und in der Bohrung eine der Bohrung angepaßte erste Welle (16, 17) drehbar gelagert ist.

3. Riegelelement nach Anspruch 2,
**dadurch gekennzeichnet, dass**
die erste Welle (16, 17) an ihrem dem Rahmen (2) zugewandten Ende von einer ersten Feder (24, 25) umschlossen ist, deren erstes Ende am Sockel (6) und deren zweites Ende an der ersten Welle befestigt ist und die erste Feder (24,25) die erste Welle (16, 17) in eine Arretier- bzw. Arbeitsposition verschwenkt.

4. Riegelelement nach Anspruch 2 oder 3,
**dadurch gekennzeichnet, dass**
die erste Welle (16, 17) an ihrem dem Rahmen (2) abgewandten Ende ein Außengewinde aufweist.

5. Riegelelement nach Anspruch 4,
**dadurch gekennzeichnet, dass**
der Durchmesser des Außengewindes der ersten Welle (16, 17) geringer ist als der Durchmesser der übrigen ersten Welle (16, 17), und daß hierdurch am Übergang zwischen Außengewinde und der übrigen ersten Welle eine Anschlagfläche für den Arretierhaken (10, 11) auf der ersten Welle gebildet ist.

6. Riegelelement nach einem der Ansprüche 4 oder 5,
**dadurch gekennzeichnet, dass**
der Arretierhaken (10, 11) von oben auf die erste Welle (16, 17) aufgesteckt, über eine vorzugsweise selbstsichernde Mutter (26, 27) mit der ersten Welle (16, 17) verschraubt ist und auf einer ebenen Fläche (9) des Sockels (6) verschwenkbar aufliegt, wobei sich die Fläche (9) an dem dem Rahmen (2) abgewandten Ende des Sockels (6) befindet.

7. Riegelelement nach einem der Ansprüche 2 bis 6,
**dadurch gekennzeichnet, dass**
der Arretierhaken (10, 11), vorzugsweise zusätzlich formschlüssig, derart mit der ersten Welle (16, 17) verbunden ist, daß das freie Ende des Arretierhakens parallel zur dritten Welle (18) ausgerichtet ist und von dem Sockel (6) wegweist.

8. Riegelelement nach einem der Ansprüche 1 bis 7,
**dadurch gekennzeichnet, dass**
der Arretierhaken (10, 11) die Form einer Nase mit einer ebenen Unterfläche (12, 13) aufweist, die eine Halteleiste oder einen Vorsprung des Containers oder dgl. überdeckt und der Sockel (6) einen lateralen Anschlag für den in seiner Stauposition befindlichen Container oder dgl. bildet.

9. Riegelelement nach einem der Ansprüche 1 bis 8,
**dadurch gekennzeichnet, dass**
der Sockel (6) einen parallel zur dritten Welle (18) verlaufenden Durchbruch oder eine Aussparung aufweist, in der eine Ablenk- bzw. Führungsrolle (7, 8) angeordnet ist, die aus dem Sockel (6) in Richtung des Containers oder dgl. herausragt und insbesondere ein einfacheres Verschieben des Containers in seine Stauposition ermöglicht.

10. Riegelelement nach Anspruch 9,
**dadurch gekennzeichnet, dass**
die erste Welle (16, 17) den Durchbruch oder die Aussparung von oben nach unten durchgreift und die Rolle (7, 8) auf der ersten Welle (16, 17) im Bereich des Durchbruchs bzw. der Aussparung drehbar gelagert ist.

## Claims

1. Locking element, in particular for securing containers and pallets on the cargo-compartment deck of an aircraft, with a frame (2) having a third shaft (18) disposed within the frame, a pedestal (6) the lower end of which is rotatably seated on the third shaft (18) so that it can be pivoted with respect to the frame (2), and at least one retaining hook (10, 11), which is attached to the pedestal (6) and can be pivoted with respect to the pedestal,
**characterized by**
a third spring (23), the first end of which is attached to the frame (2) and the second end of which is attached to the pedestal (6), and which rotates the pedestal (6) into a position, preferably perpendicular to the frame, that is the retaining, i.e. operating, position of the locking element (1).

2. Locking element according to Claim 1,
**characterized in that** the pedestal (6) comprises at least one bore that passes to a great extent vertically through the pedestal, the bore has a diameter at its end toward the frame (2) that is larger that that of the bore at its end facing away from the frame, and within the bore a first shaft (16, 17) adapted to the bore is rotatably seated.

3. Locking element according to Claim 2,
**characterized in that** the first shaft (16, 17) is enclosed at its end toward the frame (2) by a first spring (24, 25), the first end of which is attached to the pedestal (6) and the second end of which is attached to the first shaft, and the first spring (24, 25) pivots the first shaft (16, 17) into a retaining, i.e. operating, position.

4. Locking element according to Claim 2 or 3,
**characterized in that** the first shaft (16, 17) comprises an external screw thread at its end facing away from the frame (2).

5. Locking element according to Claim 4,
**characterized in that** the diameter of the external screw thread on the first shaft (16, 17) is smaller than the diameter of the remainder of the first shaft (16, 17), and that as a result a bearing surface for the retaining hook (10, 11) is formed at the transition between the external screw thread and the remainder of the first shaft.

6. Locking element according to Claim 4 or 5,
**characterized in that** the retaining hook(10, 11) is pushed onto the first shaft (16, 17) from above, is screwed to the first shaft (16, 17) by means of a preferably self-locking nut (26, 27), and bears pivotably against a flat surface (9) of the pedestal.(6), said surface (9) being situated at the end of the pedestal (6) that faces away from the frame (2).

7. Locking element according to one of the Claims 2 to 6,
**characterized in that** the retaining hook (10, 11) is connected to the first shaft (16, 17), preferably additionally form-fitted, in such a way that the free end of the retaining hook is oriented parallel to the third shaft (18) and points away from the pedestal (6).

8. Locking element according to one of the Claims 1 to 7,
**characterized in that** the retaining hook (10, 11) has the shape of a nose with a flat lower surface (12, 13) that extends over a retention strip or a projection on the container or the like, and the pedestal (6) forms a lateral abutment for the container or the like when the latter is in its storage position.

9. Locking element according to one of the Claims 1 to 8,
**characterized in that** the pedestal (6) comprises a passageway or aperture that runs parallel to the third shaft (18) and within which is disposed a deflection or guide roller (7, 8) that extends out of the pedestal (6) in the direction of the container or the like and in particular makes it simpler to shift the container into its storage position.

10. Locking element according to Claim 9,
**characterized in that** the first shaft (16, 17) passes through the passageway or aperture from above to below, and the roller (7, 8) is seated rotatably on the first shaft (16, 17) in the region of the passageway or aperture.

## Revendications

1. Élément de verrouillage (1), plus particulièrement pour protéger des conteneurs et des palettes posés sur le plancher de la soute d'un avion, comportant un cadre (2) avec un troisième arbre (18) placé dans le cadre, un socle (6) dont l'extrémité inférieure est montée sur le troisième arbre (18) de façon à pouvoir pivoter et peut tourner par rapport au cadre (2) et avec au moins un crochet d'arrêt (10, 11) fixé au socle (6) et pouvant tourner par rapport au socle, **caractérisé par** un troisième ressort (23), dont la première extrémité est fixée au cadre (2) et dont la seconde extrémité est fixée au socle (6) et fait pivoter le socle (6) dans une position de travail ou d'arrêt de préférence vertical de l'élément de verrouillage (1) par rapport au cadre.

2. Élément de verrouillage selon la revendication 1, **caractérisé en ce que** le socle (6) présente au moins un alésage vertical très étendu passant par le socle, l'alésage à son extrémité tournée vers le cadre (2) présentant un diamètre supérieur par rapport à celui de l'alésage à son extrémité opposée au cadre et un premier arbre (16, 17) ajusté à l'alésage étant monté dans ce dernier de façon à pouvoir pivoter.

3. Élément de verrouillage selon la revendication 2, **caractérisé en ce que** le premier arbre (16, 17) est entouré au niveau de son extrémité tournée vers le socle (2) par un premier ressort (24, 25), dont la première extrémité est fixée au socle (6) et dont la deuxième extrémité est fixée au premier arbre et **en ce que** le premier ressort (24, 25) fait tourner le premier arbre (16, 17) dans une position de travail ou d'arrêt.

4. Élément de verrouillage selon la revendication 2 ou 3, **caractérisé en ce que** le premier arbre (16, 17) présente un filetage mâle au niveau de son extrémité opposée au cadre 12).

5. Élément de verrouillage selon la revendication 4, **caractérisé en ce que** le diamètre du filetage mâle du premier arbre (16, 17) est inférieur à celui du premier arbre (16, 17) restant, et **en ce qu'**une surface d'arrêt pour le crochet d'arrêt (10, 11) est ainsi formée sur le premier arbre au niveau de la transition entre le filetage mâle et le premier arbre restant.

6. Élément de verrouillage selon l'une des revendications 4 ou 5, **caractérisé en ce que** le crochet d'arrêt (10, 11) est fixé par le haut au premier arbre (16, 17), est vissé sur un écrou (26, 27) de préférence autobloquant sur le premier arbre (16, 17) et repose sur une surface plane (9) du socle (6) de façon à pouvoir pivoter, la surface (9) se situant au niveau de l'extrémité du socle (6) opposée au cadre (2).

7. Élément de verrouillage selon l'une des revendications 2 à 6, **caractérisé en ce que** le crochet d'arrêt (10, 11), de préférence également mécaniquement, est relié au premier arbre (16, 17) de sorte que l'extrémité libre du crochet d'arrêt est alignée parallèlement au troisième arbre (18) et s'écarte à partir du socle (6).

8. Élément de verrouillage selon l'une des revendications 1 à 7, **caractérisé en ce que** le crochet d'arrêt (10, 11) présente la forme d'un tenon avec une surface inférieure (12, 13) plane, laquelle recouvre une barre de soutien ou une partie saillante du conteneur ou élément similaire, et le socle (6) forme une butée latérale pour le conteneur ou élément similaire se trouvant en position d'arrimage.

9. Élément de verrouillage selon l'une des revendications 1 à 8, **caractérisé en ce que** le socle (6) comporte un passage ou un évidement parallèle au .troisième arbre (18), dans lequel est disposé un galet de déviation ou un galet de guidage (7, 8) qui dépasse du socle (6) dans la direction du conteneur ou élément similaire et permet plus particulièrement un déplacement simple du conteneur dans sa position d'arrimage.

10. Élément de verrouillage selon la revendication 9, **caractérisé en ce que** le premier arbre (16, 17) traverse le passage ou l'évidement du haut vers le bas et **en ce que** le galet (7, 8) est monté de façon à pouvoir pivoter sur le premier arbre (16, 17) dans la région du passage ou de l'évidement.
